# EUROPÄISCHE PATENTSCHRIFT

(11) **EP 0 971 640 B1**
(45) Veröffentlichungstag und Bekanntmachung des Hinweises auf die Patenterteilung: **19.02.2003**
(21) Anmeldenummer: 98917015.4
(22) Anmeldetag: 19.03.1998
(51) Int. Cl.: A61C 8/00

(54) **IMPLANTATKÖRPER**
IMPLANT BODY
CORPS D'IMPLANT

(30) Priorität: 20.03.1997 DE 29705059 U
(43) Veröffentlichungstag der Anmeldung: 19.01.2000
(73) Patentinhaber: Unger, Heinz-Dieter, 49080 Osnabrück (DE)
(72) Erfinder: Unger, Heinz-Dieter, 49080 Osnabrück (DE)
(74) Vertreter: Busse & Busse Patentanwälte
(86) Internationale Anmeldenummer: EP9801610
(87) Internationale Veröffentlichungsnummer: WO98042274

(56) Entgegenhaltungen:
- BE-A- 643 278
- DE-A- 4 443 051
- US-A- 2 347 567
- US-A- 5 004 421
- US-A- 5 108 288

## Beschreibung

Die Erfindung bezieht sich auf einen in einen Kieferknochen einsetzbaren Implantatkörper nach dem Oberbegriff des Anspruches 1.

Üblicherweise wird in der Implantologie zum Einsatz eines Implantatkörpers in den Kieferknochen zunächst eine Bohrung angefertigt, die sich über die Einsatzlänge des später einzuführenden implantatkörpers erstreckt. Der einzusetzende Implantatkörper kann dabei ein selbstschneidendes Außengewinde aufweisen, mit dem er in der Wandung der angefertigten Bohrung verankert wird. Gleichwohl kann auch ein selbstschneidender Implantatkörper nicht ohne eine Pilotbohrung eingesetzt werden, sondern die Bohrung kann lediglich einen geringeren Durchmesser als das einzuschraubende Implantat aufweisen.

Es ist auch möglich, eine Bohrung der vollen Länge und Breite des Implantatkörpers anzufertigen, die dann durch einen in der Bohrung aufspreizbaren Implantatkörper ausgefüllt wird.

Diese Verfahren erfordern jedoch, daß eine Bohrung in den Kieferknochen gesetzt wird, die im wesentlichen bereits die volle Länge des Implantatkörpers aufweist, also üblicherweise im Bereich von etwa 6 bis etwa 16 mm tief ist. Dabei ergibt sich die Gefahr, daß bei kritischen anatomischen Verhältnissen bei Erstellung der Bohrung der Mandibularkanal bzw. die Kieferhöhle perforiert wird. Dieses läßt sich nicht durch die Erstellung von Röntgenbildern verhindern, da diese nur ein zweidimensionales Abbild der anatomischen Verhältnisse geben und die tatsächlichen Verhältnisse vergrößert darstellen. Auch bei Verwendung eines dreidimensionalen bildgebenden Verfahrens, etwa eines tomographischen Verfahrens, wäre nur dann eine Verletzung der genannten Strukturen ausgeschlossen, wenn die Bohrung hinreichend exakt ausgeführt würde, um die erkannten Strukturen sicher umgehen zu können.

In der Praxis steht jedoch weder ein dreidimensionales bildgebendes Verfahren zur Verfügung, noch könnte die Bohrung der Genauigkeit dieser Strukturinformationen folgen, da sie von Hand vorgenommen wird und daher mit einer entsprechenden Toleranz versehen ist.

Daher stellt sich insbesondere für den unerfahrenen Implantologen das Anfertigen der implantataufnehmenden Bohrung als große Gefahr dar, die häufig dazu führt, daß Patienten, die Implantationen benötigen, an wenige Spezialkliniken verwiesen werden.

Die US-PS 5,108,288 offenbart eine Implantationsvorrichtung, bei der ein Hülsenteil in eine Bohrung im Kieferknochen eingesetzt wird und dieses Hülsenteil zur Abstützung einer Schraube dient, die basal über die Länge des Hülsenteils hinausragt und dort in den Knochen eingreift. Eine Festlegung des Hülsenteils in dem Knochen erfolgt dabei jedoch nicht, seine Abstützung und Verdrehsicherheit während des Einschraubens der das Implantat haltenden Schraube sind nur unzureichend gesichert. Probleme stellen sich zudem, wenn eine derartige Vorrichtung beispielsweise zur Behandlung von Knochenentzündungen wieder entfernt werden soll. Auch gemäß dieser Schrift ist eine Pilotbohrung für die Einsatzlänge der Schraube anzufertigen.

Die DE 44 43 051 A1 zeigt einen Implantatkörper, der zweiteilig ausgebildet ist, wobei ein Basiskörper vorgesehen ist, in den ein sekundärer Implantatkörper einsetzbar ist, und der Basiskörper in seinem basalen Bereich Spreizflügel zur Abstützung im Kieferknochen aufweist.
Bei den von Hand vorgenommenen Bohrungen ergibt sich häufig eine kegelähnliche Aufweitung zum koronalen Rand der Bohrung hin, wodurch eine Bakterieneinwanderung an dieser Stelle begünstigt ist. Zudem wird, da die Spreizflügel im tieferen basalen Bereich der Bohrung liegen, durch ihre Ausbringung zusätzlicher Druck auf empfindliche Knochenbereiche ausgeübt. Die Bohrung wird dadurch auch im basalen Bereich aufgeweitet. Die Gefahr von Störungen des Knochens, etwa Nekrosen, ist dadurch erhöht. Bei aufgeweiteter Bohrung im koronalen Bereich kann ein fester Sitz des Implantats nur dann gewährleistet werden, wenn der Basiskörper eine erhebliche Einsatzlänge aufweist. Die Gefahr, bei Vornahme der Bohrung für einen derart langen Basiskörper beispielsweise den Mandibularkanal oder die Kieferhöhle zu perforieren, ist erheblich.

Der Erfindung liegt das Problem zugrunde, Implantatkörper zu schaffen, mit denen die Implantation insgesamt erleichtert und die Zuverlässigkeit der Verankerung erhöht ist.

Die Erfindung löst dieses Problem mit den Merkmalen des Anspruches 1. Hinsichtlich weiterer vorteilhafter Ausgestaltungen wird auf die Ansprüche 2 bis 23 verwiesen.

Durch die erfindungsgemäße Ausbildung eines Hülsenteils, das im koronalen Bereich Verankerungsteile aufweist, sowie eines in dem Hülsenteil abstützbaren Innenteils, das basal über das Hülsenteil hinausragt und in dem Kieferknochen verankert ist, ist die Möglichkeit geschaffen, eine Vorbearbeitung des Knochens, die bisher ein erhebliches Eindringen in den Knochen erforderte, lediglich im Bereich der Einsatzlänge des relativ kurzen Hülsenteils vorzunehmen, die nur einen Teil der Einsatzlänge des Implantatkörpers ausmacht. Durch den auswärts bewegbaren Verankerungsteil ist eine Abstützung des Hülsenteils sowohl gegen Rotationskräfte, insbesondere während des Eindrehens des Innenteils, als auch gegen axiale Zugkräfte erreicht.

Wenn insbesondere im koronalen Bereich des Hülsenteils Spreizflügel ausgebildet sind, wirkt hier ein Druck auf den umgebenden Knochen, so daß die Einheilung begünstigt wird.

Die erfindungsgemäß verankerte und gegen Verdrehen gesicherte Ausbildung eines Hülsenteils bietet zudem den Vorteil, daß das im Hülsenteil abgestützte Innenteil jederzeit wieder herausnehmbar ist und auf diese Weise durch das Hülsenteil ein Zugang zu der den Implantatkörper aufnehmenden Öffnung im Knochen ermöglicht ist, wobei dieser Zugang bis zur Spitze des Implantatkörpers reicht.
Dadurch ist beispielsweise die Therapierung einer Zystenbildung im Bereich der Implantatspitze möglich, wobei durch das Hülsenteil mittels eines scharfen Löffels oder dergleichen eine Exkochleierung der gebildeten Zyste stattfinden kann und, falls ausreichend Knochenmaterial in die Tiefe noch zur Verfügung steht, ein längeres Innenteil in den Kanal eingedreht werden kann, oder, falls ein hinreichendes Knochenangebot nicht zur Verfügung steht, der Kanal mit Knochenersatzmaterial oder eigenem Knochen derart verengt werden kann, daß ein Innenteil von den bisherigen Ausmaßen wieder sicher Verankerung findet.

Vorzugsweise ist nur für die Aufnahme des Hülsenteils eine Bohrung im Kieferknochen anzufertigen, wohingegen das Innenteil in seinem basalen, über das Hülsenteil im montierten Zustand der Teile hinausragenden Teil als selbstschneidender Schraubkörper ausgebildet ist und durch langsames Eindrehen in den Kieferknochen gesichert werden kann. Die Anfertigung einer Bohrung kann sich daher auf die axiale Länge des Hülsenteils beschränken, das vorzugsweise 30 bis 70 % der Einsatzlänge des Implantatkörpers im Kieferknochen einnimmt. Die Gefahr der Verletzung von Blutgefäßen bzw. der Perforation eines Nervenstranges oder der Kieferhöhle ist dadurch deutlich vermindert. Üblicherweise wird die axiale Länge des Hülsenteils etwa die Hälfte der Gesamtlänge des Implantatkörpers im Knochen einnehmen, so daß bei einer Gesamtimplantatlänge von beispielsweise 10 mm nur eine Bohrung von 5 mm Tiefe vorgefertigt werden muß. Das Hülsenteil sitzt dabei im Bereich der harten Kortikalis, so daß es sicher im Knochengewebe Verankerung findet.

Die Verletzungsgefahr ist aber nicht allein durch die verringerte Tiefe der vorzufertigenden Bohrung vermindert, sondern auch durch das langsame Eindrehen des Innenteils mit seinem basalen Ende in den über die Bohrung hinausragenden Bereich des Kieferknochens. Anders als bei Verwendung eines elektrischen Bohrers, der mit hoher Drehzahl arbeitet, wird das Innenteil, das vorzugsweise mit einem selbstschneidenden Außengewinde versehen ist und in seinem basalen Teil eine konische Gestalt aufweist, langsam mittels einer Ratsche in den Kiefer eingedreht, wobei während dieses Eindrehens, das von Hand mittels eines Drehwerkzeuges, insbesondere einer Ratsche, vorgenommen wird, jede Widerstandsänderung, die das Knochenmaterial dem Eindrehen entgegensetzt, von dem behandelnden Therapeuten unmittelbar wahrnehmbar ist.

Das Eindrehen des Innenteiles in den Knochen, ohne eine Vorbohrung vornehmen zu müssen, wird dadurch ermöglicht, daß das Innenteil in dem Hülsenteii während des Eindrehens abgestützt ist und somit einerseits frei von radialem Spiel ist, da sich das Hülsenteil in der für die Aufnahme des Hülsenteils angefertigten Bohrung im Kieferknochen seitlich abstützt. Andererseits stützen sich die Stirnflächen des Hülsenteils axial gegen das vordere Ende der vorgefertigten Bohrung ab, so daß bei Eindrehen des Innenteils in den Knochen ein axiales Verspannen zwischen dem Innenteil und dem Hülsenteil stattfindet. Durch dieses axiale und radiale Verkeilen des Hülsenteils wird ein Eindrehen eines selbstschneidenden Schraubkörpers möglich. Ein freihändiges Eindrehen eines Schraubkörpers in den Knochen ohne eine kraftaufnehmende Führung ist dagegen, insbesondere bei schwierigen anatomischen Verhältnissen, praktisch nicht durchführbar, da ein Kontaktieren von besonders harten Knochenbalken oder von schwammartigen Bereichen zu einem Seitwärtsversatz des Schraubkörpers führt.

Vorzugsweise sind die Verankerungsteile als Spreizflügel ausgebildet, wobei durch Eindrehen des Innenteiles die Spreizflügel aufgeweitet werden und somit die Abstützung des Hülsenteils in der Bohrung zusätzlich sichern. Weiter ist dadurch die Möglichkeit eröffnet, bei einer auftretenden Periimplantitis, die mit einem Aufweichen des Knochens im koronalen Bereich des Implantates einhergeht, eine Nachspannung des Hülsenteils vornehmen zu können, wodurch das Hülsenteil wieder eine sichere Verankerung auch in seinem koronalen Bereich erfährt.

Zusätzlich ist es möglich, über eine eingesetzte Hülse Knochen- oder Knochenersatzmaterial durch die Bohrung in den Kieferknochen einzubringen. Dies kann beispielsweise erforderlich sein, wenn der Knochen sehr dünn ist und bei tiefem Eindrehen die Gefahr einer Perforation der Kiefernhöhle besteht. Ebenfalls ist möglich, falls beim Einschrauben eines in dem Hülsenteil abzustützenden Vorschneideinstruments der Knochen lingual oder labial perforiert wird, über den Hülsenteil des Implantats Knochen- und/oder Knochenersatzmaterial ebenfalls an diese perforierte Knochenstelle zu bringen. Aufgrund der die Perforationsstelle nach außen hin abdeckenden Schleimhaut ist die Einheilung des Knochen- oder Knochenersatzmaterials hier problemlos möglich. Daher kann nach diesem Verfahren auch eine bewußte Perforation des Knochens im lingualen Bereich angestrebt werden, um eine Beschädigung des nervus mandibularis auszuschließen. Eine Nervverlagerung ist dann entbehrlich, die hier mit verbundenen Risiken (taube Lippe) können vermieden werden. Das über den Hülsenteil eingebrachte Knochen- oder Knochenersatzmaterial kann eine seitliche Perforation oder eine Durchbohrung in die Kiefernhöhle derart stabil abdichten, daß ein Eindrehen des Implantatkörpers in dieses Knochen- oder Knochenersatzmaterial möglich ist. Je nach Verhältnissen kann dabei zunächst das Knochen- oder Knochenersatzmaterial eingebracht werden und die Hülse zunächst mit einer Einheilkappe versehen werden, oder es kann unmittelbar in das eingebrachte Knochen- oder Knochenersatzmaterial der Implantatkörper eingedreht und festgelegt werden.

Durch die vorteilhafte Ausstattung des Implantatinnenteils mit einem koaxial zu seiner Drehachse verlaufenden Innenkanal, der das Innenteil vollständig durchdringt, ist es möglich, beispielsweise einen Lichtleiter in den Innenkanal einzuführen, um somit während des Eindrehens dieses Innenteiles optisch wahrnehmen zu können, wenn die Spitze des einzudrehenden Teils des Implantatkörpers sich einem Blutgefäß oder einem Knochenabschluß im Bereich einer Kieferhöhle oder gar einer Schleimhaut nähert. Auf diese Weise kann rechtzeitig während des Eindrehens des Innenteiles der Vorgang gestoppt werden, falls die anatomischen Verhältnisse eine tiefere Verankerung im Knochen nicht zulassen.

Statt des optischen Lichtleiters kann auch während des Eindrehens des Innenteils ein Meßdraht in dem Innenkanal angeordnet sein, dessen apikales Ende als Elektrode ausgebildet ist, die in Kontakt mit dem abzutragenden Bereich des Gewebes steht und hier eine Potentialdifferenzmessung gegen ein Referenzpotential vornimmt. Bei Verletzung eines Blutgefäßes und insbesondere von Nerven ändert sich die gemessene Potenzialdifferenz sprunghaft, so daß der Therapeut das weitere Eindrehen des Innenteiles sofort stoppen kann.

Wenn sich während des Eindrehens des Implantatteils herausstellt, daß die vorgesehene Länge des Implantatkörpers nicht verwendet werden kann, so läßt sich das vorgesehene Innenteil gegen ein kürzeres auswechseln.

Wenn das Innenteil des Implantates einen solchen Innenkanal aufweist, kann dieser auch zur späteren Behandlung einer Knochenentzündung im Bereich der Implantatspitze (apikale Ostitis) Verwendung finden, indem der Lichtleiter eines Lasers, beispielsweise eines Nd-YAg-Lasers, in den Innenkanal eingeführt wird und das Laserlicht im Bereich der Implantatspitze wirksam werden kann, wo es zur Abtötung von Keimen dient.

Auch eine medikamentöse Behandlung durch diesen Innenkanal ist möglich, wenn der Lentulo eines Winkelstückes zur Medikamentenübertragung in den Bereich der Implantatspitze eingesetzt wird. Es ist möglich, einen derartigen Innenkanal mit einem Stift zu verschließen, um das Einwandern von Bakterien zu verhindern. In Frage kommt etwa ein Gutta-Percha-Stift.

Auch kann zunächst eine Vorbohrung über einen mit einem Innenkanal versehenen Schraubkörper durchgeführt werden, der sich in dem Hülsenteil abstützt und von Hand vorgedreht wird, wobei nach erfolgter Vorbohrung mit einem solchen Schraubkörper dieser entfernt werden kann und ein endgültiges Innenteil, entweder mit oder ohne Innenkanal, eingesetzt werden kann.

Ein solcher Schraubkörper, der in dieser Weise verwendet wird, kann beispielsweise ein glasartiges vorderes Abschlußstück ausweisen, wodurch die Anwendung eines Lichtleiters nicht behindert wird, der jedoch die Festigkeit der Bohrspitze an einen metallischen Bohrer annähert. Anschließend kann dann ein Innenteil eingeschraubt werden, das beispielsweise einen Innenkanal ohne Abschlußelement aufweist, so daß dieses wieder in der genannten Art für die Medikamentengabe oder Laserbehandlung eingesetzt werden kann, falls dieses notwendig werden sollte. Sowohl der Schraubkörper zum Vorbohren als auch das Innenteil stützen sich dabei axial und radial in dem Hülsenteil ab, so daß einerseits das seitliche Spiel des einzudrehenden Körpers auf nahezu Null zurückgeführt ist und andererseits durch das axiale Verspannen mit dem Hülsenteil ein motorisches Vorbohren - außer für das kurze Hülsenteil - in jedem Fall vermieden werden kann. In jedem Fall kann der Vorbohrer oder das Innenteil von Hand eingedreht werden, wobei während des Eindrehens eine Kontrolle des Knochenwiderstandes jederzeit erfühlbar ist.

Weitere Vorteile und Einzelheiten ergeben sich aus der Zeichnung und der nachfolgenden Beschreibung mehrerer Ausführungsbeispiele des Gegenstandes der Erfindung.

In der Zeichnung zeigen:
- Fig. 1: einen erfindungsgemäßen Implantatkörper in teilweise geschnittener seitlicher Ansicht,
- Fig. 2: den Implantatkörper nach Fig. 1 in Ansicht von unten,
- Fig. 3: den Implantatkörper nach Fig. 1 in Ansicht von oben,
- Fig. 4: das Innenteil des Implantatkörpers nach Fig. 1,
- Fig. 4a: eine Querschnittsansicht des Innenteils nach Fig. 4 mit einem Gutta-Percha-Stift zur Abdichtung des zentralen Inspektionskanals,
- Fig. 5: das Hülsenteil des Implantatkörpers nach Fig. 1 in längsschnittlicher Ansicht,
- Fig. 6: das Hülsenteil nach Fig. 5 in Ansicht von oben,
- Fig. 7: eine ähnliche Ansicht zu Fig. 1 eines alternativen Implantatkörpers mit seitlich vorstehenden Gewindegängen,
- Fig. 8: den Implantatkörper nach Fig. 7 in Ansicht von unten,
- Fig. 9: das Hülsenteil des Implantatköpers nach Fig. 7 in Seitenansicht,
- Fig. 10: das Hülsenteil nach Fig. 9 in längsschnittlicher Ansicht,
- Fig. 11: das Hülsenteil nach Fig. 10 in Ansicht von oben,
- Fig. 12: einen konischen Implantatkörper mit zwischen dem Gewinde des sekundären und des primären Implantatteils befindlicher Quetschhülse.

Im einzelnen weist der Implantatkörper 1,101 ein ein primäres Implantatteil bildendes Hülsenteil 2,102 sowie ein ein sekundäres Implantatteil bildendes Innenteil 3 auf. Das Innenteil 3 ist über einen Teilbereich seiner axialen Einsatzlänge I in den Kieferknochen im Hülsenteil 2,102 abgestützt und ragt bei Einsatz des Implantatkörpers 1,101 mit seinem basalen Anteil 4 axial über das Hülsenteil 2,102 hinaus, wobei es in dem Kieferknochen über diesen herausragenden Anteil 4 verankert ist. Dieser basale, herausragende Anteil 4 des Innenteiles 3,103 ist als mit einem selbstschneidenden Außengewinde versehener Schraubenkörper ausgebildet. Zudem ist das Innenteil 3 in seinem bei Einsatz in den Kieferknochen koronalen Bereich mit einem mechanischen Außengewinde 5 versehen, mit dem es in ein Innengewinde 6 des Hülsenteils 2,102 eingreift und somit in diesem abstützbar ist. Insgesamt stellt das Innenteil 3 einen durch Drehbewegung in das Hülsenteil 2,102 und den Knochen ein- und ausschraubbaren Rotationskörper dar.

Die axiale Länge des Hülsenteils 2,102 nimmt in den gezeigten Ausführungsbeispielen etwa 50% der Einsatzlänge 1 des Implantatkörpers 1,101 im Kieferknochen ein.

Bei dem Längenverhältnis zwischen dem herausragenden Teilbereich 4 des Innenteiles 3 und dem Hülsenteil 2,102 muß einerseits sichergestellt sein, daß eine genügende Länge des Verankerungsteils 4 zum sicheren Halt des Implantatkörpers 1,101 im Knochen verbleibt, also das Hülsenteil 2,102 einen nicht zu großen Anteil der axialen Einsatzlänge I einnimmt, andererseits sollte das Hülsenteil 2,102 einen hinreichenden Anteil der axialen Länge I einnehmen, um eine sichere Führung des Innenteils 3 zu gewährleisten und sicherzustellen, daß bei Eindrehen des Innenteils 3 in das Hülsenteil 2,102 erst dann die Spitze 7 des basalen Teils 4 des Innenteils 3 in das Knochengewebe eindringt, wenn zumindest ein Gewindegang des Außengewindes 5 des Innenteils 3 in einem Gewindegang des Innengewindes 6 des Hülsenteils 2,102 Abstützung gefunden hat.

Das Hülsenteil 2,102 wird daher 30 bis 70% der Einsatzlänge I des Implantatkörpers 1,101 im Knochen einnehmen.

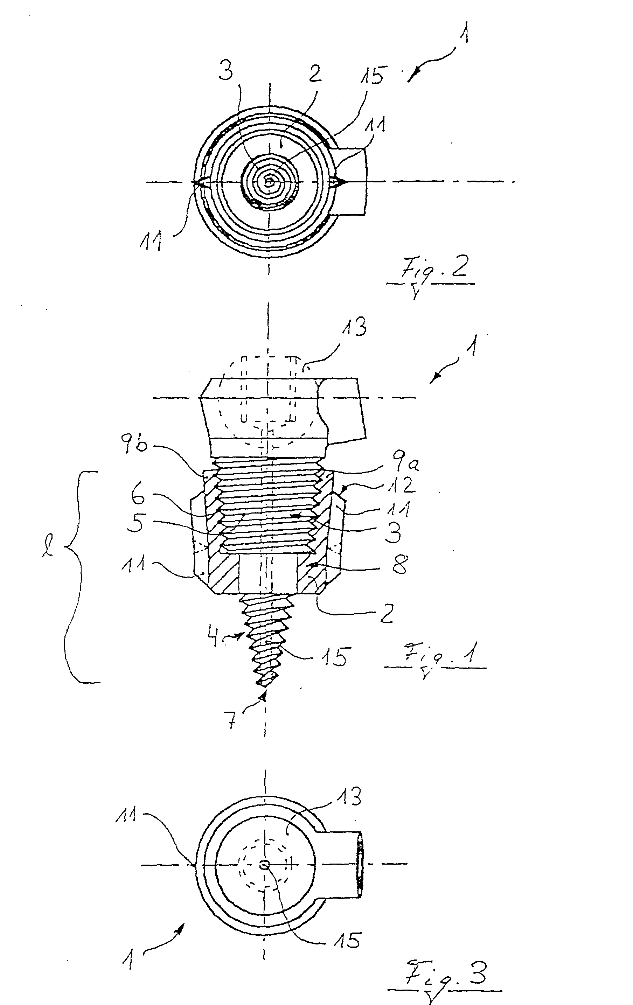

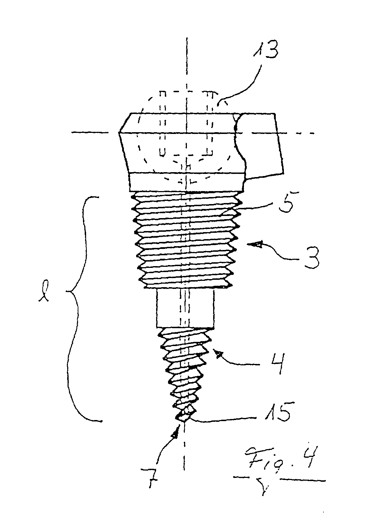

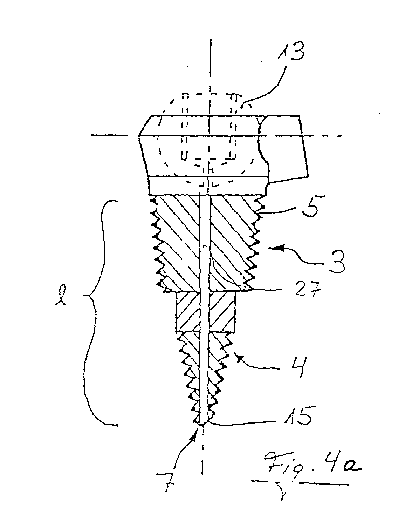

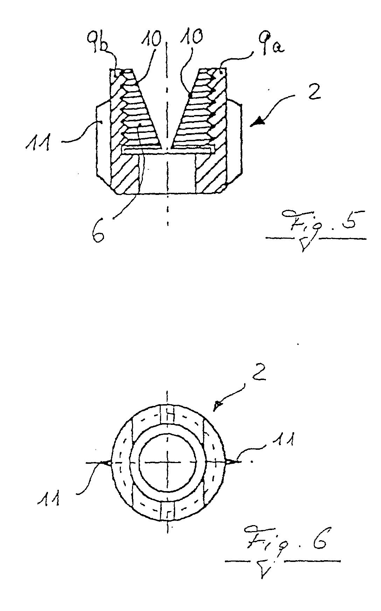

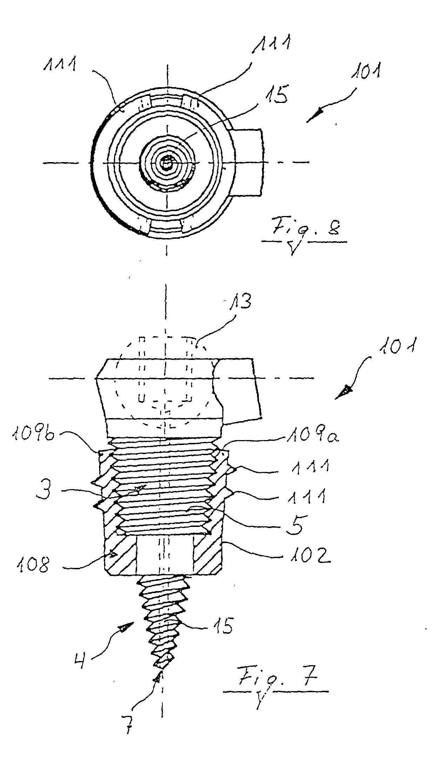

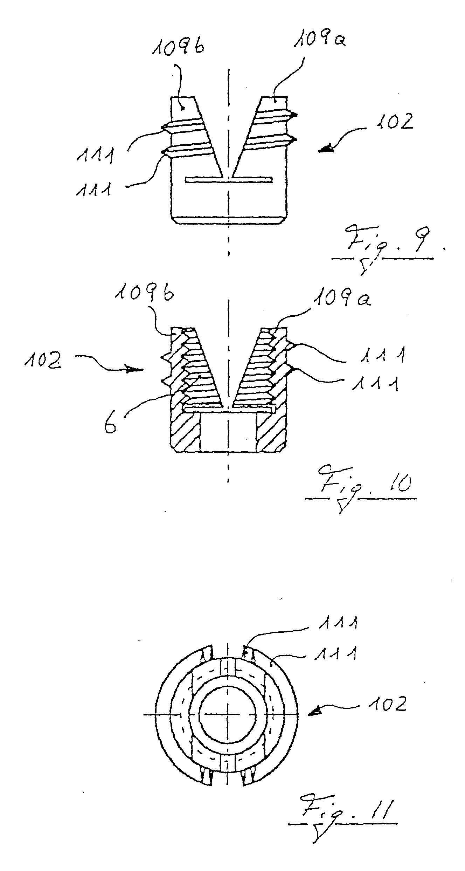

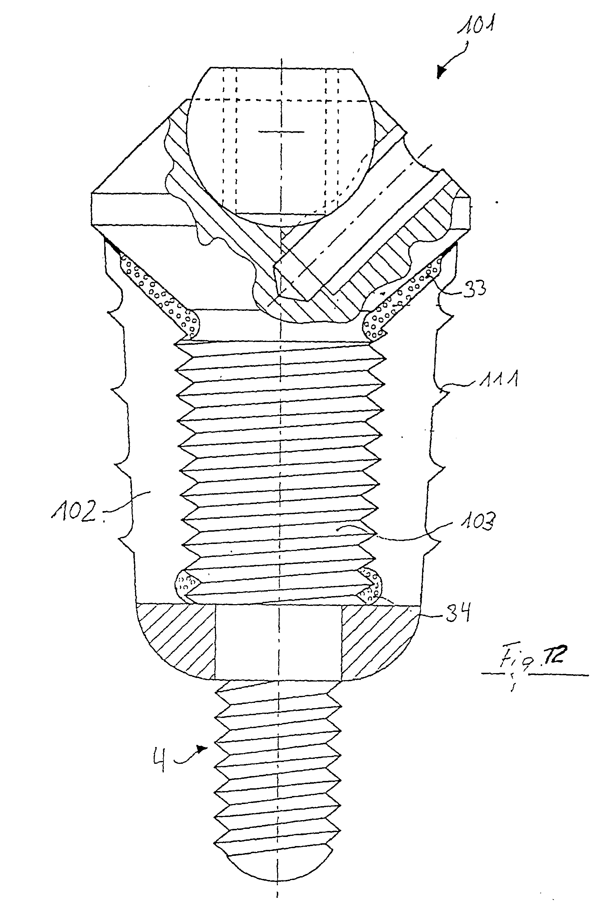

In beiden Ausführungsbeispielen (Fig. 1 bis Fig. 6 und Fig. 7 bis Fig. 11) ist das Hülsenteil 2,102 als in seinem basalen Bereich 8,108 geschlossener Ringkörper ausgebildet, an den sich in koronale Richtung Spreizflügel 9a,9b,109a,109b anschließen. Das Hülsenteil 2,102 ist dennoch insgesamt als einstückiger Körper ausgebildet. Die Spreizflügel 9a,9b,109a,109b sind durch Einschnitte 10,110 in das Hülsenteil 2,102 gebildet.

Zum Einsatz in derartige Hülsen 2,102 sind Innenteile 3 vorgesehen, deren Außengewinde 5 sich nach koronal hin konisch erweitert, so daß bei Eindrehen des Innenteils 3 in das Hülsenteil 2,102 eine Aufweitung der Spreizflügel 9a,9b,109a,109b bewirkt wird, wie unten eingehend beschrieben.

Es ist dabei nicht zwingend, daß ein Hülsenteil 2,102 jeweils zwei Spreizflügel 9a,9b bzw. 109a,109b ausbildet, sondern auch andere Anzahlen von Spreizflügeln sind möglich. Bei Ausbildung von zwei Spreizflügeln 9a,9b bzw. 109a,109b werden diese in der Regel in distal-mesialer Ausrichtung im Kiefer angeordnet sein, um eine möglichst hinreichende und massive Knochensubstanz zur Abstützung vorzufinden. In bestimmten Fällen, beispielsweise wenn ein solcher Implantatkörper 1,101 nach Extraktion eines Zahnes in den durch die Zahnwurzel gebildeten Hohlraum eingesetzt wird, kann es sich jedoch empfehlen, das Hülsenteil in lingual-bukkaler Ausrichtung einzusetzen, da die Zahnwurzel einen derartig erstreckten Hohlraum hinterläßt.

Statt der gezeigten Spreizflügel 9a,9b,109a,109b sind auch andere auswärts bewegbare Verankerungsteile zur Festlegung des Hülsenteils 2,102 denkbar, beispielsweise Keile, die in Schlitzausnehmungen des Hülsenteils geführt sind, oder ähnliches.

Um einen sicheren Halt des Hülsenteils 2,102 im Knochen zu gewährleisten, ist dieses außenseitig mit erhaben ausgebildeten, aus seiner äußeren Wandung herausragenden Anformungen 11,111 versehen.

Die Anformungen 11 sind als im Querschnitt keilförmige Rippen ausgebildet, die einerseits eine Verdrehsicherung des Hülsenteils 2 bei Ein- oder Ausdrehen des Innenteils 3 darstellen und gleichzeitig als axiale Sicherung des Hülsenteils 2 wirken. Dabei sind die koronalen Enden 12 der angeformten Rippen 11 axial zum koronalen Ende des Hülsenteils 2 beabstandet, so daß sich sowohl basal der Rippen 11 als auch koronal der oberen Abschlüsse 12 Knochengewebe - zumindest nach einer Einheilzeit - befindet und die Rippen somit auch eine Abstützung der Hülsenteile 2 gegen auftretende Zugbelastungen auf den Implantatkörper 1 darstellen.

Bei den konisch aufweitbaren Hülsenteilen 2 können die Rippen 11 mehrteilig ausgebildet sein (in Fig. 1 gestrichelt eingezeichnet), um nicht der Aufspreizung im Wege zu stehen.

Die gleiche Doppelfunktion sowohl als Verdrehsicherung als auch als axiale Sicherung des Hülsenteils 102 erfüllen die dort angeformten Gewindegänge 111, die ebenfalls einen keilförmigen Querschnitt ausbilden und selbstschneidend in den Knochen eindrehen. Dabei ist nicht erforderlich, daß das Hülsenteil 102, vollständig von einem Außengewinde umgeben ist, sondern es reichen ein bis zwei Gewindegänge 111 auf der Außenseite des Hülsenteils 102.

In seinem koronalen, über den Knochen vorstehenden Bereich ist das Innenteil 3 mit Ansatzflächen für ein Drehwerkzeug, beispielsweise eine Ratsche, versehen, mittels der das Innenteil 3 per Hand in das Hülsenteil 2,102 eingedreht werden kann. Hierfür kann zusätzlich eine Verlängerung ausgebildet sein, so daß beim Eindrehen der Hebelarm der Ratsche in jedem Fall oberhalb von umstehenden Zähnen bewegt werden kann, so daß ein Eindrehen des Innenteils 3 auch unter schwierigen räumlichen Verhältnissen möglich ist.

Das Innenteil 3 ist als Anker für prothetische Suprakonstruktionen ausgebildet, wozu insbesondere ein im koronalen Teil des Innenteils 3 vorgesehener Kugeladapter 13 dienen kann. Auch andere Befestigungsmöglichkeiten für die Suprakonstruktion, insbesondere Zahnersatzteile, sind möglich.

Um einerseits die Eindringtiefe des Innenteils 3 in den Knochen bestimmen zu können und andererseits auch nach einem Herausdrehen des Innenteils 3 in reproduzierbarer Weise ein gleichartiges oder anderes Innenteil 3 in gleicher Tiefe in den Knochen wieder einsetzen zu können, sind an dem Innenteil 3 und/oder an dem Hülsenteil 2,102 optische Markierungen 14 angebracht, mit deren Hilfe die Einschraubtiefe verifizierbar ist. Diese Markierungen können als umlaufende Ringe ausgebildet sein oder als vertikale, versetzt über das Innenteil angeordnete Teilmarkierungen, die mit Gegenstücken auf dem Hülsenteil 2,102 zur Deckung gebracht werden können.

Bei Eindrehen des Innenteils 3 in das Hülsenteil 2,102 greift zunächst der basale Bereich des Außengewindes 5 mit zumindest einem Gewindegang in den koronalen Bereich des Innengewindes 6 des Hülsenteils 2,102 ein, bevor die Spitze 7 des Innenteils 3 auf den basalen Grund der zum Einsatz des Hülsenteils 2,102 vorgefertigten Bohrung trifft. Dieses Auftreffen auf den Grund der Bohrung ist als Widerstand spürbar, der dem Therapeuten signalisiert, ab wann das einschneidende Eindrehen des Innenteils 3 oder eines vorab benutzten Vorbohrers, dessen Maße dem einzusetzenden Innenteil 3 entsprechen und der ebenfalls von Hand eingedreht wird, beginnt.

Bei beiden Ausführungsbeispielen weitet sich mit zunehmendem Eindrehen des Innenteils 3 das Hülsenteil 2 in seinem koronalen Bereich der Spreizflügeln 9a,9b bzw. 109a,109b seitwärts auf, so daß hierdurch eine Verankerung gegen die seitlichen Wandungen der vorgefertigten Bohrung für das Hülsenteil 2 erreicht wird.

Mit zunehmendem Eindrehen des aus dem Hülsenteil 2,102 basal herausragenden Anteils 4 des Innenteils 3 findet ein zunehmendes axiales Verkeilen des Hülsenteils 2,102 in der Bohrung statt, da die Gewindegänge des selbstschneidenden Gewindes des herausragenden Anteils 4 des Innenteils 3 sich im Knochen axial gegen die basale Abschlußfläche des Hülsenteils 2,102 verspannen. Dadurch ist ein sicherer Halt des Implantatkörpers 1,101 sowohl in axialer Richtung zum Abfangen von Kaudrücken und Zugspannungen als auch in radialer Richtung gewährleistet.

Besonders vorteilhaft weist das einen Rotationskörper ausbildende Innenteil 3 des Implantatkörpers 1,101 einen durchgehenden Innenkanal 15 auf, der den Rotationskörper 3 axial durchdringt.

Der Innenkanal 15 kann dabei sowohl koaxial zur Drehachse verlaufen als auch leicht angeschrägt zu dieser, so daß er im Randbereich des Gewindes verläuft.

Der Innenkanal 15 kann an dem apikalen Ende 7 ein Abschlußelement 16 aufweisen.

Ein solches Abschlußelement 16 kann als transparenter, glasartiger und geschlossener Abschluß des basalen Endes 7 des Innenkanals 15 ausgebildet sein. Damit ist eine Spitze 7 geschaffen, die als Teil des eindrehenden Schraubkörpers 4 ausgebildet ist und gegenüber diesem keine Formausnehmung bildet. Die Spitze 7 kann daher während des Eindrehens am Komprimieren des Knochens oder an dessen schneidendem Bohren teilnehmen.

Der Innenkanal 15 ist zur Aufnahme eines endoskopischen Lichtleiters vorgesehen, so daß während des Eindrehens des Innenteils 3 die Spitze 7 eine optische Kontrollmöglichkeit bietet, um die Knochenstruktur im Bereich dieser Spitze 7 wahrnehmen zu können. Wenn während des Einschraubens des Innenteils 3 ein Blutgefäß bzw. Nerv verletzt wird oder sich das Innenteil 3 mit seiner Spitze 7 der Schleimhaut oder der Kieferhöhle nähert, so ist dieses durch den in den Innenkanal 15 eingesetzten Lichtleiter sichtbar, und der Therapeut kann das weitere Eindrehen, das von Hand geschieht, des Innenteiles 3 sofort stoppen. Sollte sich während des Eindrehens herausstellen, daß eine solche anatomische Struktur einem weiteren Eindrehen hinderlich ist, ohne daß bereits die vorgesehene Einsatzlänge I des Innenteils 3 im Knochen erreicht ist, so kann das Innenteil 3 wieder herausgedreht werden, um es durch ein kürzeres und breiteres zu ersetzen.

Die optische Kontrolle der Spitze 7 des Innenteiles 3 durch einen endoskopischen Lichtleiter ist sowohl bei basal offenem Ende des Innenkanals 15 möglich, als auch, wenn dieses durch ein Abschlußelement 16 aus Glas oder einem anderen transparenten Werkstoff verschlossen ist. Derartige Lichtleiter sind ab ca. 0,3 mm Durchmesser erhältlich.

Weiter kann der Innenkanal 15 zur Aufnahme eines Lichtleiters eines Lasers benutzt werden, mit dessen Hilfe eine Therapierung beispielsweise einer apikalen Ostitits auch bei eingesetztem Implantatkörper 1,101 vorgenommen werden kann, indem der Laser-Lichtleiter in den Innenkanal 15 eingeführt wird und durch das Laserlicht im Bereich rund um die Spitze 7 des Innenteiles 3 befindliche Keime abgetötet werden können.

Ebenso kann der Innenkanal 15 zur Aufnahme des Lentulos eines Winkelstückes dienen, wodurch eine Medikamentengabe in den apikalen Bereich durch den Innenkanal 15 ermöglicht ist, so daß dieser auch hier nicht allein zur optischen Inspizierung während des Vortriebs oder danach dient, sondern auch zur Therapie von Knochenveränderungen, die bisher ein vollständiges Herausnehmen des Implantatkörpers erforderlich gemacht hätten.

Der in einem Innenteil 3 angeordnete Innenkanal 15 kann nach Einsetzen des Implantatkörpers 1,101 auch durch einen Stift 27 verschlossen werden, um eine Einwanderung von Krankheitserregern zu verhindern. Der Stift 27 - beispielsweise Gutta-Percha oder Titan - kann bei Bedarf aus dem Innenkanal 15 entfernt werden.

Eine weitere Möglichkeit, den Vortrieb des Innenteils 3 hinsichtlich der Verletzung von beispielsweise Nervensträngen im Knochen zu kontrollieren, besteht darin, daß während des Eindrehens des Innenteiles 3 ein elektrisch leitender Meßdraht in den Innenkanal eingeführt und in diesem festgelegt ist, der an seinem im Bereich der basalen Spitze 7 des Innenteils 3 befindlichen Ende eine Elektrode ausbildet und eine Potentialdifferenz gegenüber einem Referenzpotential mißt, so daß eine Spannungsänderung als Maß für das Auftreten unterschiedlicher Strukturen im Knochen meßbar ist.

Insbesondere wenn die Spitze 7 auf einen Nervenstrang trifft, wird es eine deutliche Spannungsänderung geben, so daß auch hier der Therapeut das weitere Eindrehen sofort unterbrechen kann, ohne daß der Nerv verletzt würde, da das Eindrehen von Hand geschieht und die Spitze 7 vorteilhaft im wesentlichen eine Komprimierungswirkung ausübt, ohne daß dadurch sofort eine ernsthafte Verletzung eines Nervenstrangs resultieren könnte.

Da das Innenteil 3 ebenfalls als Rotationskörper ausgebildet ist und mit seinem Gewinde 5 in dem Gewinde 6 des Hülsenteils 2,102 festgelegt ist, kann es jederzeit wieder herausgedreht werden, so daß auch bei einem massiven Innenteil ohne Innenkanal 15 eine Therapierung apikaler Bereiche ohne vollständige Herausnahme des gesamten Implantatkörpers 1,101 möglich ist und das Innenteil 3 nach Vornahme der Therapie wieder in das Hülsenteil 2,102 eingedreht werden kann.

Ein erfindungsgemäßer Implantatkörper 1,101 kann insgesamt sowohl mit als auch ohne Vorbohrer für das Innenteil 3 verwendet werden.

Allein für das Hülsenteil 2,102 wird eine motorisch vorgetriebene Bohrung in den Kieferknochen eingebracht, die jedoch aufgrund der geringen axialen Länge des Hülsenteils 2,102 unkritisch ist hinsichtlich der Verletzung von Blutgefäßen, Nerven oder der Kieferhöhle.

Das Eindrehen des Innenteiles 3 wird in jedem Fall von Hand vorgenommen, unabhängig davon, ob ein Vorbohrer eingesetzt wird oder nicht.

Bei Verzicht auf einen Vorbohrer für das Innenteil 3 läßt sich dieses in einem Arbeitsgang eindrehen, wobei mittels des genannten Innenkanals 15 eine optische Kontrolle des Eindrehvorgangs jederzeit möglich ist. Auch bei Verwendung eines Vorbohres bleibt diese optische Kontrollmöglichkeit erhalten, wobei das anschließend einzusetzende Innenteil 3 einen Innenkanal 15 insbesondere zur Therapierung aufweisen kann oder als Massivkörper, insbesondere bei unkritischen Knochenstukturen, ausgebildet sein kann.

Das Gewinde zwischen dem primären Implantat 2,102 und dem sekundären Implantat 3,103 kann mittels eines Dichtkörpers 33 - beispielsweise aus Titan oder Kunststoff - abgedichtet sein, der in seinem basalen Bereich einen umlaufenden Ring 34 ausbildet, von dem sich axial aufweitbare Flügelkörper erstrecken können, um damit eine Mitdehnung bei konischen Hülsen 102 zu ermöglichen. Bei Verwendung eines Dichtungskörpers 33 wird zunächst ein Vorbohrer verwendet, der über einen mitbewegten Skalierungsring die Tiefe seines Eindringens in den Knochen anzeigt. Nach Entfernen des Vorbohrer kann anhand der Stellung des Skalierungsrings abgelesen werden, wie tief das sekundäre Implantatteil 3,103 in das Hülsenteil 2,102, das als primäres Implantatteil dient, einzudrehen ist. Bei diesem Eindrehen des endgültigen Innenteils 3,103 wird der Dichtungskörper 33 zwischen den primären und den sekundären Implantatteil zur Abdichtung eingelegt.

## Patentansprüche

1. Implantatkörper (1;101) zum Einsatz in insbesondere menschliche Kieferknochen, wobei der Implantatkörper (1;101) zur Abstützung einer Suprakonstruktion, die zumindest einen Teil eines Zahnersatzes darstellt, ausgebildet ist und ein in eine Bohrung im Kieferknochen einsetzbares Hülsenteil (2;102) sowie ein bereichsweise in dem Hülsenteil (2;102) abstützbares Innenteil (3) umfaßt, wobei das Hülsenteil (2) zumindest auf einem Teil seiner Einsatzlänge als geschlossener Ringkörper (8) ausgebildet ist und auswärts in Eingriff mit der Wandung der Bohrung im Kieferknochen bewegbare Verankerungsteile (9a,9b;109a,109b) zu seiner Festlegung im Knochen umfaßt, **dadurch gekennzeichnet, daß** das Innenteil (3) im montierten Zustand der Teile basal über das Hülsenteil (2;102) hinausragt und in dem Kieferknochen verankert ist und das Hülsenteil (2;102) den geschlossenen Ringkörper (8;108) in seinem basalen und die Verankerungsteile (9a,9b;109a,109b) in seinem koronalen Bereich aufweist.

2. Implantatkörper nach Anspruch 1, **dadurch gekennzeichnet, daß** das Hülsenteil (2,102) in seinem koronalen Bereich Spreizflügel (9a,9b;109a,109b) als Verankerungsteile aufweist.

3. Implantatkörper nach Anspruch 2, **dadurch gekennzeichnet, daß** das Hülsenteil (2;102) einstückig ausgebildet ist und die Spreizflügel (9a,9b;109a, 109b) durch Einschnitte (10;110) in seinem koronalen Wandungsbereich gebildet sind.

4. Implantatkörper nach einem der Ansprüche 1 bis 3, **dadurch gekennzeichnet, daß** das Hülsenteil (2;102) 30 - 70 % der Einsatzlänge (I) des Implantatkörpers im Kieferknochen einnimmt.

5. Implantatkörper nach einem der Ansprüche 1 bis 4, **dadurch gekennzeichnet, daß** das Hülsenteil (2;102) an seiner äußeren Wandung mit herausragenden, in den Knochen eingreifenden Anformungen (11;111) versehen ist.

6. Implantatkörper nach Anspruch 5, **dadurch gekennzeichnet, daß** die Anformungen (11;111) als im Querschnitt keilförmige Rippen oder als selbstschneidende Gewindegänge ausgebildet sind.

7. Implantatkörper nach einem der Ansprüche 5 oder 6, **dadurch gekennzeichnet, daß** das koronale Ende (12) der Anformungen (11;111) einen axialen Abstand zu dem koronalen Ende des Hülsenteils (2;102) aufweist.

8. Implantatkörper nach einem der Ansprüche 1 bis 7, **dadurch gekennzeichnet, daß** das Hülsenteil (2;102) ein Innengewinde (6) und das Innenteil (3) ein hierzu komplementäres Außengewinde (5) aufweist.

9. Implantatkörper nach einem der Ansprüche 1 bis 8, **dadurch gekennzeichnet, daß** das Innenteil (3) in seinem basalen Bereich (4) als selbstschneidender Schraubkörper ausgebildet ist.

10. Implantatkörper nach einem der Ansprüche 1 bis 9, **dadurch gekennzeichnet, daß** das Innenteil (3) in seinem koronalen Bereich konisch ausgebildet ist.

11. Implantatkörper nach einem der Ansprüche 1 bis 10, **dadurch gekennzeichnet, daß** das Innenteil (3) an seinem koronalen Endbereich mit Ansatzflächen für ein Drehwerkzeug versehen ist.

12. Implantatkörper nach einem der Ansprüche 1 bis 11, **dadurch gekennzeichnet, daß** das Innenteil (3) als Anker für prothetische Suprakonstruktionen ausgebildet ist.

13. Implantatkörper nach einem der Ansprüche 1 bis 12, **dadurch gekennzeichnet, daß** die Einschraubtiefe des Innenteils (3) mit Hilfe optischer Markierungen (14) verifizierbar ist.

14. Implantatkörper nach Anspruch 13, **dadurch gekennzeichnet, daß** die optischen Markierungen (14) am Innenteil (3) und an der Hülse angeordnete, zur Deckung bringbare Markierungsteile umfassen.

15. Implantatkörper nach einem der Ansprüche 1 bis 14, **dadurch gekennzeichnet, daß** der tionskörper Innenteil (3) einen zentralen Innenkanal (15) aufweist, der den Rotationskörper Innenteil (3) entlang seiner axialen Ausdehnung vollständig durchdringt.

16. Implantatkörper nach Anspruch 15, **dadurch gekennzeichnet, daß** der Innenkanal (15) ein Abschlußelement (16) aufweist.

17. Implantatkörper nach Anspruch 16, **dadurch gekennzeichnet, daß** das Abschlußelement (16) in den Innenkanal (15) einsetz- und in diesem verankerbar ist.

18. Implantatkörper nach einem der Ansprüche 16 oder 17, **dadurch gekennzeichnet, daß** das Abschlußelement (16) als transparenter, glasartiger, geschlossener Körper am basalen Ende des Innenkanals (15) ausgebildet ist.

19. Implantatkörper nach einem der Ansprüche 15 bis 18, **dadurch gekennzeichnet, daß** der Innenkanal (15) zur Aufnahme eines endoskopischen Lichtleiters ausgebildet ist.

20. Implantatkörper nach Anspruch 19, **dadurch gekennzeichnet, daß** im Endbereich des Lichtleiters eine optische Linse (19) in dem Innenteil (3) - vorgesehen ist.

21. Implantatkörper nach einem der Ansprüche 15 bis 20, **dadurch gekennzeichnet, daß** der Innenkanal (15) zur Aufnahme eines Laserlichtleiters ausgebildet ist.

22. Implantatkörper nach einem der Ansprüche 15 bis 21, **dadurch gekennzeichnet, daß** der Innenkanal (15) zur Aufnahme eines Lentulos zur therapeutischen Behandlung eines im basalen Bereich des in den Knochen eingesetzten Innenteils (3) befindlichen Knochenabschnitts ausgebildet ist.

23. Implantatkörper nach einem der Ansprüche 15 bis 22, **dadurch gekennzeichnet, daß** der Innenkanal (15) zur Aufnahme eines Meßdrahtes zur Erfassung einer Potentialdifferenz ausgebildet ist.

## Claims

1. Implant body (1;101) for insertion particularly in human jaw bones, where the implant body (1;101) is designed to support a superstructure which represents at least part of a set of dentures, and comprises a sleeve section (2;102) that can be inserted in an opening in the jaw bone, and an internal section (3) that can be supported in certain areas in the sleeve section (2;102), and where the sleeve section (2) is designed as a closed annular body (8) on at least part of its length of insertion, and comprises anchoring parts (9a; 9b; 109a, 109b) that can be moved outwards when engaged with the wall of the opening in the jaw bone, for securing it in the bone, **characterised in that** the internal section (3) projects basally from the sleeve section (2; 102) when the parts are assembled and is anchored in the jaw bone, and **in that** the sleeve section (2; 102) exhibits the closed annular body (8;108) in its basal area and the anchoring parts (9a, 9b; 109a, 109b) in its coronal area.

2. Implant body according to claim 1, **characterised in that** the sleeve section (2, 102) exhibits expanding wings (9a, 9b; 109a, 109b) as anchoring parts in its coronal area.

3. Implant body according to claim 2, **characterised in that** the sleeve section (2; 102) is designed in one piece and **in that** the expanding wings (9a, 9b; 109a, 109b) are formed by incisions (10; 110) in its coronal wall area.

4. Implant body according to one of claims 1 to 3, **characterised in that** the sleeve section (2; 102) occupies 30 - 70% of the insertion length (I) of the implant body in the jaw bone.

5. Implant body according to one of claims 1 to 4, **characterised in that** the sleeve section (2; 102) is provided on its external wall with projecting structures (11; 111) engaging in the bone.

6. Implant body according to claim 5, **characterised in that** the structures (11; 111) are designed as ribs that are wedge-shaped in cross-section, or as self-tapping threads.

7. Implant body according to one of claims 5 or 6, **characterised in that** the coronal end (12) of the structures (11; 111) exhibits an axial distance from the coronal end of the sleeve section (2; 102).

8. Implant body according to one of claims 1 to 7, **characterised in that** the sleeve section (2; 102) exhibits a female thread (6) and **in that** the internal section (3) exhibits a male thread (5) complementary to it.

9. Implant body according to one of Claims 1 to 8, **characterised in that** the internal section (3) is designed in its basal area (4) as a sell-tapping screw element.

10. Implant body according to one of claims 1 to 9, **characterised in that** the internal section (3) exhibits a conical shape in its coronal area.

11. Implant body according to one of claims 1 to 10, **characterised in that** the internal section (3) is provided in its coronal end area with shoulder faces for a turning tool.

12. Implant body according to one of claims 1 to 11, **characterised in that** the internal section (3) is designed as anchor for prosthetic superstructures.

13. Implant body according to one of claims 1 to 12, **characterised in that** the screw-in depth of the internal section (3) can be verified by means of optical markings (14).

14. Implant body according to claim 13, **characterised in that** the optical markings (14) comprise marking parts that are arranged on the internal section (3) and on the sleeve so that they cover them.

15. Implant body according to one of claims 1 to 14, **characterised in that** the internal section (3) of the rotatory body exhibits a central internal channel (15), which fully penetrates the internal section (3) of the rotatory body along its axial extension.

16. Implant body according to claim 15, **characterised in that** the internal channel (15) exhibits a sealing element (16).

17. Implant body according to claim 16, **characterised in that** the sealing element (16) can be inserted and anchored in the internal channel (15).

18. Implant body according to one of claims 16 or 17, **characterised in that** the sealing element (16) is designed as a transparent, glass-like, closed body at the basal end of the internal channel (15).

19. Implant body according to one of claims 15 to 18, **characterised in that** the internal channel (15) is designed to receive an endoscopic light conductor.

20. Implant body according to claim 19, **characterised in that** an optical lens (19) is provided in the internal section (3) in the end area of the light conductor.

21. Implant body according to one of claims 15 to 20, **characterised in that** the internal channel (15) is designed to receive a laser light conductor.

22. Implant body according to one of claims 15 to 21, **characterised in that** the internal channel (15) is designed to receive a lentulo for the therapeutic treatment of a section of bone located in the basal area of the internal section (3) inserted in the bone.

23. Implant body according to one of claims 15 to 22, **characterised in that** the internal channel (15) is designed to receive a measuring wire for recording a potential difference.

## Revendications

1. Corps d'implant (1 ;101) pour utilisation en particulier dans un os maxillaire humain, qui est configuré pour soutenir une superstructure représentant au moins une partie d'un appareil dentaire et comprend une partie en forme de douille (2 ; 102) qui peut être insérée dans un alésage de l'os maxillaire ainsi qu'une partie interne (3) pouvant s'appuyer localement dans la douille (2 ; 102), cette dernière (2) ayant, sur au moins une partie de sa longueur d'implantation la forme d'un corps annulaire (8) et comportant des parties d'ancrage (9a, 9b ; 109a, 109b) en prise vers l'extérieur avec la paroi de l'alésage et pouvant se déplacer dans l'os maxillaire pour fixer le corps d'implant dans cet os,
**caractérisé en ce que**
la partie interne (3), quand les parties sont montées, dépasse la base de la partie en forme de douille (2 ; 102) et est ancrée dans l'os maxillaire, la partie en forme de douille (2 ; 102) comprenant à sa base le corps annulaire fermé (8 ; 108) et à sa périphérie en forme de couronne, les parties d'ancrage (9a, 9b ; 109a, 109b).

2. Corps d'implant selon la revendication 1,
**caractérisé en ce que**
la partie en forme de douille (2, 102) présente dans sa zone en forme de couronne des ailettes d'expansion (9a, 9b ; 109a, 109b) comme parties d'ancrage.

3. Corps d'implant selon la revendication 2,
**caractérisé en ce que**
la partie en forme de douille (2 ; 102) est monobloc et les ailettes d'expansion (9a, 9b ; 109a, 109b) sont réalisées dans sa zone de paroi en forme de couronne par des entailles (10 ; 110).

4. Corps d'implant selon l'une des revendications 1 à 3,
**caractérisé en ce que**
la partie en forme de douille (2 ; 102) occupe de 30 à 70 % de la longueur d'insertion (1) du corps d'implant dans l'os maxillaire.

5. Corps d'implant selon l'une des revendications 1 à 4,
**caractérisé en ce que**
la partie en forme de douille (2 ; 102) présente en saillie sur sa paroi externe des bossages (11 ; 111) engagés dans l'os maxillaire.

6. Corps d'implant selon l'une des revendications 1 à 5,
**caractérisé en ce que**
les bossages (11 ; 111) sont constitués par des nervures à section en forme de coin ou par des spires d'un filetage autotaraudeur.

7. Corps d'implant selon l'une des revendications 5 ou 6,
**caractérisé en ce que**
l'extrémité (12) des bossages (11 ; 111) située du côté de la couronne est axialement espacée de l'extrémité de la partie en forme de douille (2 ; 102) située du côté de la couronne.

8. Corps d'implant selon l'une des revendications 1 à 7,
**caractérisé en ce que**
la partie en forme de douille (2 ; 102) présente un filetage externe (6) auquel correspond un filetage externe (5) porté par la partie interne (3).

9. Corps d'implant selon l'une des revendications 1 à 8,
**caractérisé en ce que**
la partie interne (3), dans sa zone de base (4) a la configuration d'un corps fileté autotaraudeur.

10. Corps d'implant selon l'une des revendications 1 à 9,
**caractérisé en ce que**
la partie interne (3) est conique dans sa zone en forme de couronne.

11. Corps d'implant selon l'une des revendications 1 à 10,
**caractérisé en ce que**
la partie interne (3), à l'extrémité de sa zone en forme de couronne, présente des portées de raccordement d'un outil de rotation.

12. Corps d'implant selon l'une des revendications 1 à 11,
**caractérisé en ce que**
la partie interne (3) est configurée en ancrage pour des superstructures formant prothèses.

13. Corps d'implant selon l'une des revendications 1 à 12,
**caractérisé en ce que**
la profondeur de vissage de la partie interne (3) peut être vérifiée à l'aide de marquages optiques (14).

14. Corps d'implant selon la revendication 13,
**caractérisé en ce que**
les marquages optiques (14) prévus sur la partie interne (3) et sur la partie en forme de douille comportent des parties de marquage pouvant être amenées en recouvrement.

15. Corps d'implant selon l'une des revendications 1 à 14,
**caractérisé en ce que**
la partie interne (3) du corps de rotation présente un canal interne (15) qui traverse totalement cette partie (3) le long de son extension axiale.

16. Corps d'implant selon la revendication 15,
**caractérisé en ce que**
le canal interne (15) présente un élément de fermeture (16).

17. Corps d'implant selon la revendication 16,
**caractérisé en ce que**
l'élément de fermeture (16) peut être inséré et ancré dans le canal interne (15).

18. Corps d'implant selon l'une des revendications 1 à 17,
**caractérisé en ce que**
l'élément de fermeture (16) est constitué par un corps transparent du genre verre, fermé à l'extrémité du canal interne (15) située vers la base.

19. Corps d'implant selon l'une des revendications 15 à 18,
**caractérisé en ce que**
le canal interne (15) est constitué pour accueillir un conducteur de lumière endoscopique.

20. Corps d'implant selon la revendication 19,
**caractérisé en ce qu'**
il est prévu vers l'extrémité du conducteur de lumière, une lentille optique (19) dans la partie interne (3).

21. Corps d'implant selon l'une des revendications 15 à 20,
**caractérisé en ce que**
le canal interne (15) est configuré pour accueillir un conducteur de lumière laser.

22. Corps d'implant selon l'une des revendications 15 à 21,
**caractérisé en ce que**
le canal interne (15) est configuré pour accueillir un lentulos pour le traitement thérapeutique de la partie de l'os qui se trouve dans la zone de base de la partie interne (3) insérée dans l'os.

23. Corps d'implant selon l'une des revendications 15 à 22,
**caractérisé en ce que**
le canal interne (15) est constitué pour accueillir un fil de mesure servant à détecter une différence de potentiel.
